# EUROPEAN PATENT SPECIFICATION

(11) **EP 2 154 787 B1**
(45) Date of publication and mention of the grant of the patent: **08.06.2011**
(21) Application number: 08162333.2
(22) Date of filing: 13.08.2008
(51) Int. Cl.: H04B 1/40

(54) **Wireless device having fast-receive mode for measuring received signal strength (RSSI) for higher time division multiple access (TDMA) multislot classes**
Drahtlose Vorrichtung mit schnellem Empfangsmodus zur Messung der Stärke des Empfangssignals (RSSI) für höhere Time Division Multiple Access (TDMA) Klassen mit mehreren Schlitzen
Dispositif sans fil disposant d'un mode de réception rapide pour mesurer la force d'un signal reçu (RSSI) pour des classes plus élevées à plusieurs intervalles de temps d'accès multiple de division de temps (TDMA)

(43) Date of publication of application: 17.02.2010
(60) Divisional application: 11159323.2
(73) Proprietor: RESEARCH IN MOTION LIMITED, Waterloo, Ontario N2L 3W8 (CA)
(72) Inventor: Tran, Phat Hong, Waterloo Ontario N2K 4A7 (CA); Kravets, Oleksiy, Kitchener Ontario N2E 3Z8 (CA)
(74) Representative: Patel, Binesh

(56) References cited:
- US-A1- 2004 001 531
- US-B1- 6 757 261

## Description

The present technology relates generally to wireless communications and, more particularly, to wireless communications that utilize time division multiple access (TDMA).

Received Signal Strength Indication (RSSI) is a measurement of the power present in a received radio signal. The RSSI measurements are used by a wireless communications device to determine the signal strengths of radio signals emanating from base stations in the vicinity of the device. The RSSI measurements enable the device to ascertain which base station is currently providing the optimal wireless link and when to perform a handover from one base station to another.

In a typical time division multiple access (TDMA) radio-access technology (RAT) implementation, such as GSM/GPRS/EDGE, at least one RSSI measurement is made per frame for voice calls or data transfer. Thus, for a GSM-based implementation, since each GSM frame has only 8 timeslots, an RSSI measurement must be scheduled within one or more of the timeslots. Where only a single downlink slot and a single uplink slot are used, there is generally no problem scheduling at least one RSSI measurement per GSM frame.

However, GPRS/EGPRS wireless devices and mobile phones may utilize multislot classes. This technology enables more than one downlink timeslot or more than one uplink timeslot per frame. A multislot class can have a value between 1 and 45. For example, a class 10 multislot device, which is currently quite prevalent, uses a maximum of 4 timeslots in the downlink direction and 2 timeslots in the uplink direction. However, the total number of timeslots per frame may not, for class 10, exceed 5. Thus, the network configures either 4 Rx + 1 Tx or 3 Rx + 2 Tx (meaning 4 downlink slots plus 1 uplink slot, or 3 downlink slots plus 2 uplink slots). Multislot classes with a class rating of 31 or higher are deemed to be high (or "higher") multislot classes. These higher multislot classes are to utilize 6 or 7 timeslots per frame for either uplink or downlink. For example, a multislot class 32 would employ 5 downlink slots and 3 uplink slots with a maximum of 6 timeslots.

In these higher multislot classes, however, there is generally insufficient space to perform an RSSI measurement because of the substantial time required to stabilize the phase-locked loop of the receiver. One inadequate solution would be to implement a highly advanced and expensive PLL design in the device; however, this is not cost-effective for consumer wireless devices. Another solution would be to employ more than one receiver, but the use of an extra transceiver chip is not only expensive but also adds unwanted bulk to the device. For Evolved EDGE, which will require a second receiver, operating both receivers consumes more power than would be desirable. There is therefore a need for a solution to one or more of the foregoing problems.

US-B1-6757261 discloses a GSM transceiver using time division multiplex in which multiple data registers are used to store the phase lock loop frequency control data.

US 2004/001531 discloses a frequency hopping spread spectrum transceiver. The transmitter communicates a preamble over a number of preamble channels, and thereafter communicate groups of data bytes that each comprise a subset of the data message over a predetermined sequence of data channels. The receiver investigates the predetermined number of preamble channels to search for the preamble and tests the received bits to insure that the preamble and a start frame delimiter have been properly received to synchronise the receiver with the transmitter.

### GENERAL

In general, the present technology may enable a wireless communications device to utilize higher TDMA multislot classes without requiring a second receiver or without requiring that the transceiver chip implement an advanced and expensive phase-locked loop (PLL) design. The wireless communications device may implement higher TDMA multislot classes by reducing the time required to complete a received signal strength indication (RSSI) measurement. The time required to complete an RSSI measurement may be reduced by initiating the collection of RSSI signal samples prior to complete stabilization of the PLL. The wireless communications device can thus operate in two distinct receiver modes, a normal receive mode in which the TDMA data is received and a fast receive mode (or dedicated, lower-power RSSI measurement mode) in which the device does not wait for the PLL to stabilize prior to commencing the collection of signal strength samples. By performing the steps of PLL stabilization and signal sample collection substantially in parallel, or at least partially in parallel, the total time required for measuring RSSI can be reduced to an amount that can be fitted (i.e. scheduled) within the remaining space available in one of the timeslots of the frame. This novel technique may enable the device to receive data in one mode while measuring RSSI in another mode. Even if the receiver is not exactly on-frequency during the RSSI measurement, a useful signal strength reading can nonetheless be obtained.

Thus, one aspect of the present technology may be a method of transmitting and receiving data using a wireless communications device that is enabled for higher multislot classes in which a plurality of uplink timeslots of each TDMA frame is reserved for transmitting data and a plurality of downlink timeslots of each TDMA frame is reserved for receiving data. This novel method may comprise steps of receiving TDMA data on at least one of the plurality of downlink timeslots reserved for receiving data, switching a transceiver of the wireless communications device from a receiver mode to a transmitter mode, transmitting TDMA data on at least one of the plurality of uplink timeslots reserved for transmitting data, switching the transceiver of the wireless communications device from the transmitter mode to the receiver mode, and measuring, with the transceiver operating in the receiver mode, a received signal strength indication (RSSI) by initiating collection of RSSI signal samples prior to complete stabilization of a phase-locked loop (PLL) of the transceiver.

In one implementation the step of measuring the RSSI may comprise steps of programming the transceiver for the receiver mode, initiating stabilization of the PLL, initiating collection of RSSI signal samples while the PLL is still stabilizing, and terminating the receiver mode when a maximum number of RSSI signal samples have been collected, wherein the maximum number of RSSI signal samples is constrained by a remaining space available in a timeslot during which the RSSI is to be measured.

In another implementation the step of measuring the RSSI may comprise initiating collection of RSSI signal samples once the phase-locked loop has stabilized the frequency of a local oscillator to within, for example, 20 kHz of the carrier frequency. It will be appreciated that this 20 kHz value is only presented by way of illustration, and any other suitable frequency differential could be used based on the specific parameters of the device.

In yet another implementation the step of measuring the RSSI may comprise initiating collection of RSSI signal samples once the phase-locked loop has stabilized the frequency of a local oscillator to within, for example, 10 kHz of the carrier frequency. It will be appreciated that this 10 kHz value is only presented by way of illustration, and any other suitable frequency differential could be used based on the specific parameters of the device.

Another main aspect of the present technology may be a computer program product that includes code adapted to perform the steps of any of the foregoing methods when the computer program product is loaded into memory and executed on a processor of a wireless communications device.

Yet another main aspect of the present technology may be a wireless communications device enabled for higher multislot classes in which a plurality of uplink timeslots of each TDMA frame is reserved for transmitting data and a plurality of downlink timeslots of each TDMA frame is reserved for receiving data. The device may comprise a radiofrequency transceiver having a phase-locked loop for locking the phase of a local oscillator of the transceiver to the phase of a carrier signal, and a processor for instructing the radiofrequency transceiver to switch between a normal data-receiving mode in which TDMA data is received on reserved downlink slots and a dedicated RSSI-measurement mode for measuring a received signal strength indication (RSSI) wherein collection of RSSI signal strength samples is initiated prior to complete stabilization of the phase-locked loop.

In one implementation each TDMA frame may have eight timeslots of which at least six timeslots are reserved for either data transmission or data reception.

In another implementation each TDMA frame may have eight timeslots of which at least seven timeslots are reserved for either data transmission or data reception.

In yet another implementation the radiofrequency transmitter may operate at a lower power when operating in the dedicated RSSI measurement mode.

### BRIEF DESCRIPTION OF THE DRAWINGS

Further features and advantages of the present technology will become apparent from the following detailed description, taken in combination with the appended drawings, in which:

FIG. 1 is a schematic depiction of a wireless network and a wireless communications device on which the present technology can be implemented;

FIG. 2 is a flowchart outlining some of the main steps of a method of enabling a wireless communications device to implement higher TDMA multislot classes in accordance with one or more implementations of the present technology;

FIG. 3 is a flowchart depicting some of the specific steps involved in switching over from one mode to another mode;

FIG. 4 is a flowchart depicting some of the specific steps involved in measuring the RSSI;

FIG. 5 is a schematic depiction of an eight-timeslot GSM frame;

FIG. 6 is a schematic depiction of the GSM frame of FIG. 5 configured for a 4 Rx + 2 Tx multislot class;

FIG. 7 is a schematic depiction of a novel technique of initiating RSSI sampling prior to complete stabilization of the PLL;

FIG. 8 is a schematic depiction of the prior art approach of serially stabilizing the PLL prior to initiating the sampling of the signal strength;

FIG. 9 is a graph schematically illustrating the stabilization of a PLL as a function of time;

FIG. 10 is a schematic depiction of a technique of initiating sampling at a time t1 that is prior to a time ts corresponding to complete stabilization of the PLL;

FIG. 11 is a schematic depiction of a technique of initiating sampling at a time t2 that is prior to a time ts corresponding to complete stabilization of the PLL;

FIG. 12 is a schematic circuit diagram of the RF receiver, A/D converter and DSP used for obtaining RSSI measurements and TDMA data; and

FIG. 13 is a schematic circuit diagram of the RF transceiver chip showing the presence of local oscillators having respective phase-locked loops.

It will be noted that throughout the appended drawings, like features are identified by like reference numerals.

### DESCRIPTION OF PREFERRED EMBODIMENTS

The details and particulars of the various aspects of the technology will now be described below, by way of example, with reference to the attached drawings.

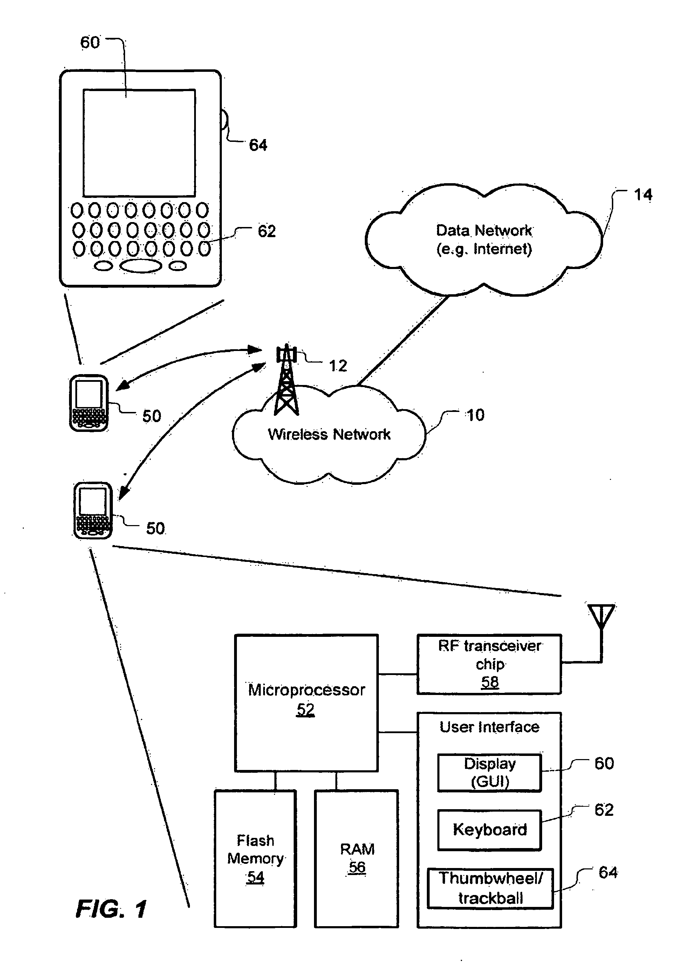

FIG. 1 is a schematic depiction of a wireless network and a wireless communications device on which the present technology can be implemented.

For the purposes of this specification, the expression "wireless communications device" is meant to encompass a broad range of portable or mobile communication devices such as smart phones, cell phones, satellite phones, wireless-enabled PDA's or wireless-enabled Pocket PCs or tablets, and any other device that is capable of exchanging data over a radiofrequency channel or wireless link.

FIG. 1 depicts schematically a wireless network 10 which, in this case, is a TDMA-based mobile communications network such as a GSM network. The wireless network 10 has at least one base station tower 12 for communicating over radio frequencies with a wireless communications device 50. The wireless network 10 may also be connected to a data network such as, for example, the Internet through which the wireless communications device 50 can exchange and obtain data. The wireless communications device 50 may have both voice and data capabilities (optionally for both e-mail and Web browsing) The wireless communications device 50 includes a processor or microprocessor 52 that is operatively coupled to memory (e.g. Flash Memory 54 and RAM 56) and a radiofrequency transceiver (e.g. the RF transceiver circuitry or RF chip 58) for transmitting and receiving voice and data. Furthermore, the wireless communications device may include a display or graphical user interface 60, e.g. an LCD screen, a keyboard/keypad 62 and an optional thumbwheel or trackball 64.

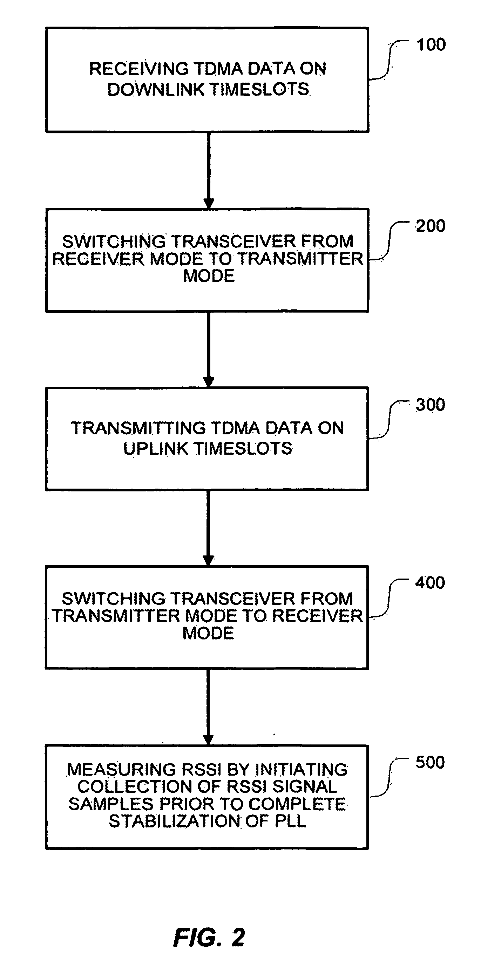

FIG. 2 is a flowchart outlining some of the main steps of a method of enabling a wireless communications device to implement higher TDMA multislot classes in accordance with one or more implementations of the present technology. This novel method enables the transmitting and receiving of data using a wireless communications device that is enabled for higher multislot classes in which a plurality of uplink timeslots of each TDMA frame is reserved for transmitting data and a plurality of downlink timeslots of each TDMA frame is reserved for receiving data. As depicted in FIG. 2, the novel method generally involves a step 100 of receiving TDMA data on at least one of the plurality of downlink timeslots reserved for receiving data. The method further includes a step 200 of switching a transceiver of the wireless communications device from a receiver mode to a transmitter mode. The method also includes a step 300 of transmitting TDMA data on at least one of the plurality of uplink timeslots reserved for transmitting data. The method further includes a step 400 of switching the transceiver of the wireless communications device from the transmitter mode to the receiver mode. The method further involves a step 500 of measuring, with the transceiver operating in the receiver mode, a received signal strength indication (RSSI) by initiating collection of RSSI signal samples prior to complete stabilization of a phase-locked loop (PLL) of the transceiver.

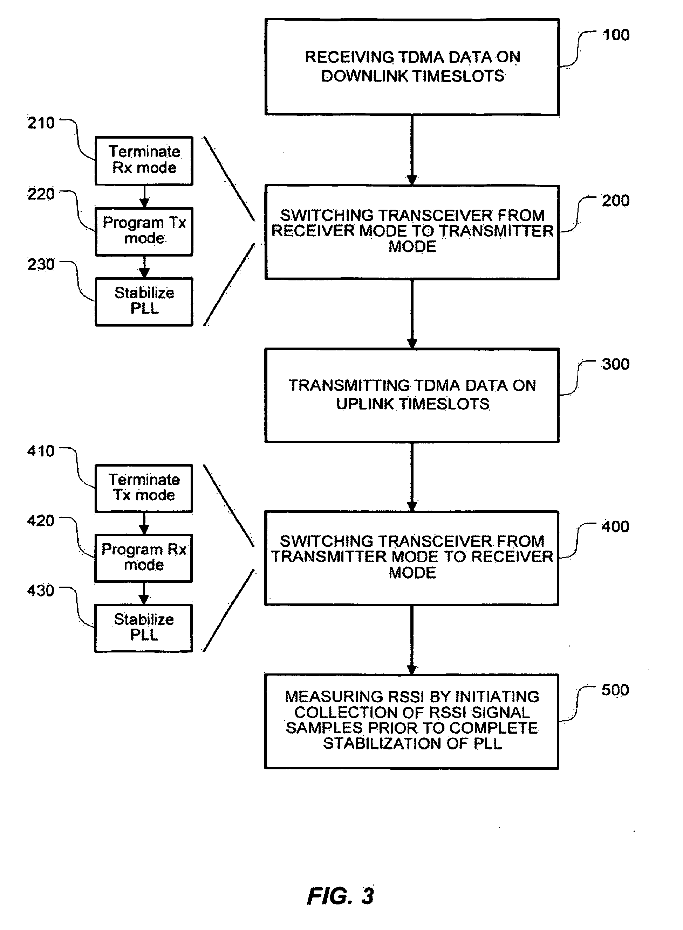

In one implementation of this technology, as depicted in FIG. 3, the step 200 of switching the transceiver from the receiver mode to the transmitter mode entails a step 210 of terminating the receiver mode, a step 220 of programming the transceiver for the transmitter mode, and a step 230 of stabilizing the PLL for the transmitter mode.

In one implementation of this technology, as further depicted in FIG. 3, the step 400 of switching the transceiver from the transmitter mode to the receiver mode entails a step 410 of terminating the transmitter mode, a step 420 of programming the transceiver for the receiver mode, and a step 430 of stabilizing the PLL for the receiver mode.

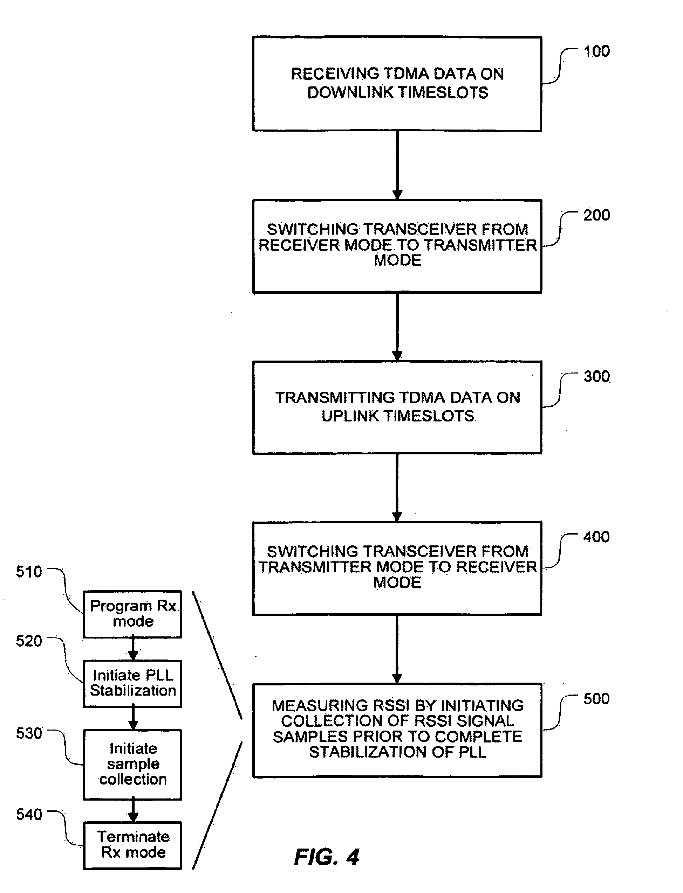

In one implementation of this technology, as depicted in FIG. 4, the step of measuring the received signal strength indication (RSSI) entail a step 510 of programming the transceiver for the receiver mode, a step 520 of initiating stabilization of the PLL, a step 530 of initiating collection of RSSI signal samples while the PLL is still stabilizing, and a step 540 of terminating the receiver mode when a maximum number of RSSI signal samples have been collected, wherein the maximum number of RSSI signal samples is constrained by a remaining space available in a timeslot during which the RSSI is to be measured.

In one specific implementation, the step 500 of measuring the received signal strength indication (RSSI) comprises initiating collection of RSSI signal samples once the phase-locked loop has stabilized the frequency of a local oscillator to within 20 kHz of the carrier frequency. In a variant of this implementation, the onset of sample collection can be deferred until the local oscillator has stabilized to within 10 kHz of the carrier frequency. These values, it should be appreciated, are provided merely by way of example to illustrate an approximate frequency differential (or "error") that can be tolerated for the purposes of initiating collection of signal strength samples. By initiating collection of RSSI samples before the PLL associated with the local oscillator has fully stabilized, a substantially more rapid RSSI measurement can be obtained, thus enabling the RSSI measurement to be scheduled in the remaining space in a given timeslot. Since the RSSI measurement can be scheduled in the space remaining in one of the timeslots of the frame, the higher multislot classes can be implemented. This novel technique enables higher multislot classes to be implemented without resorting to the undesirably expensive solution of utilizing a very advanced PLL design or using a second receiver. Use of a second transceiver chip not only increases cost but also augments the "silicon space" inside the device (thus increasing the overall bulk of the device). For a mobile device, where both low cost and small size are paramount concerns, this is clearly disadvantageous. In contrast, the present technology enables the device to use higher multislot classes with a standard PLL design and only a single transceiver chip (i.e. only one receiver). Even for Evolved EDGE devices, where a second receiver is mandated by the standard, this novel technology is useful because the second receiver can either be shut off or powered down to thereby reduce power consumption and thus prolong battery life.

Since RSSI measurements are done at least once every frame, the timing analysis presented below by way of example illustrates why an RSSI measurement cannot be scheduled into a typical eight-slot GSM frame in the case of higher multislot classes.

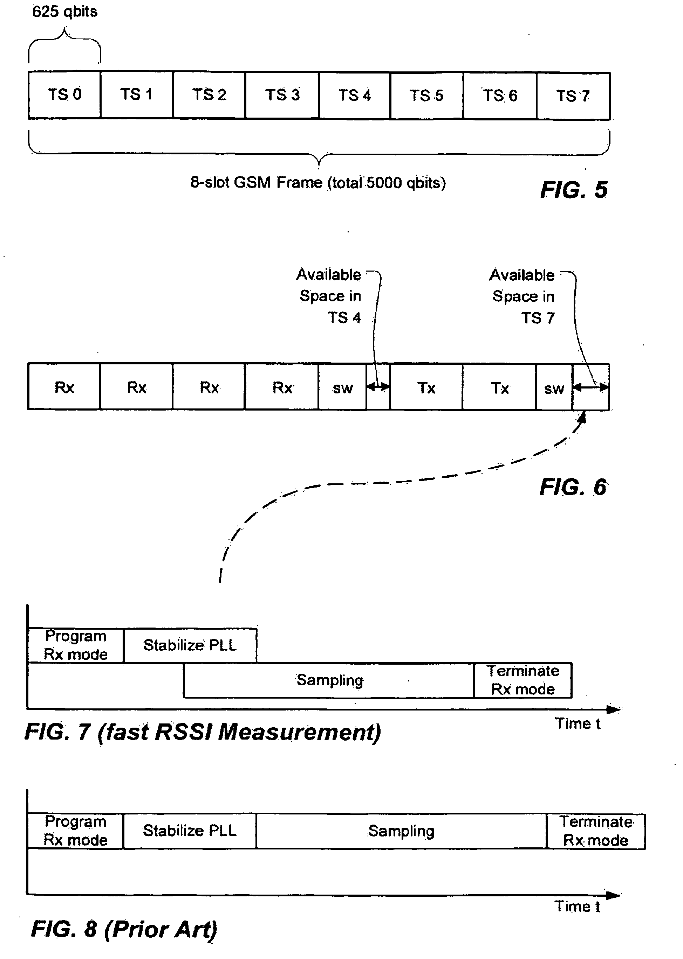

As shown in FIG. 5, the duration of the 8-slot GSM frame is calculated as follows: 8 time slots* 625 GSM quarter bits (qbits) per slot = 5000 qbits. For the purposes of illustration, an example calculation is presented below for a typical class 10 implementation having 4 downlink timeslots and 2 uplink timeslots. The qbit values are presented merely by way of example to illustrate the underlying principle that (when using the prior-art approach) there is inadequate space available for performing an RSSI measurement in one of the timeslots of the frame. It should of course be understood that these values may vary depending on the particular attributes of the network and on the characteristics of the transceiver in the wireless communications device.

As shown in FIG. 6, yn the worst case frame structure for the 4 timeslots used for downlink data, 2 timeslots used for uplink data and 1 RSSI measurement, the timeslots would be occupied as follows:
1. Slots 0-3 occupied by 4 downlink slots (Rx).
2. Slot 4:
   a) terminating Rx mode (114 qbits);
   b) potential space (1) for RSSI (625 - (114+98+222) = 191 qbits);
   c) programming radio transceiver for uplink (Tx) operation (98 qbits);
   d) stabilizing (settling) radio transceiver in uplink (Tx) mode (PLL stabilization , etc.) (222 qbits)
3. Slots 5,6 occupied by 2 uplink slots (Tx).
4. Slot 7:
   a) terminating Tx mode (39 qbits);
   b) potential space (2) for RSSI (625 - (39+100+118) = 368 qbits)
   c) programming radio transceiver for next frame downlink operation (next frame slots 0-3 Rx) (100 qbits)
   d) stabilizing radio transceiver in downlink (Rx) mode (PLL stabilization, etc.) (118 qbits)

It bears underscoring that the foregoing values are merely presented by way of example to illustrate the underlying principle.

In this particular example, the time required for performing one (1) RSSI measurement can be calculated as follows:
1. Programming the radio transceiver for the Rx mode (100 qbits)
2. Stabilizing the radio transceiver in the downlink (Rx) mode (PLL stabilization, etc.) (118 qbits)
3. Receiving 100 samples for RSSI calculation (400 qbits)
4. Terminating the Rx mode (114 qbits)

In this specific example, the total number of quarter bits needed to perform one RSSI calculation is equal to 732 qbits. This is problematic since there are only 368 qbits of space available in this example. Thus, in this example, it is not possible to schedule an RSSI measurement into this GSM frame. Again, it should be understood that these values are presented merely by way of example. The values may vary depending on the specific attributes of the network and the specific characteristics of the transceiver in the wireless device.

Using the novel technology described herein, however, it is possible to fit an RSSI measurement into this typical right-timeslot GSM frame. To fit the RSSI measurement into the available space remaining in one of the timeslots of the frame, the total time needed to measure RSSI is reduced. As depicted schematically in FIG. 7, the total time needed for an RSSI measurement is reduced by initiating the collection of signal samples prior to complete stabilization of the phase-locked loop (PLL) of the receiver. In other words, the wireless communications device begins to collect signal strength (RSSI) samples and sent these collected samples to a digital signal processor (DSP) prior to complete stabilization of the PLL. Thus, the step of PLL stabilization occurs at least partially in parallel with the step of signal strength sample collection. By at least partially overlapping the sample collection and the PLL stabilization, the total time required for an RSSI measurement is significantly reduced. In contradistinction, in the prior art, the steps of programming the Rx mode, stabilizing the PLL, sampling and termination of the Rx mode were performed serially, i.e. in a non-overlapping sequence, as shown schematically in FIG. 8.

The processor of the wireless device can be configured to cause the radiofrequency transceiver to collect a maximum number of RSSI signal samples, where the maximum number is constrained by the remaining space available in a timeslot during which RSSI is measured. In other words, if the remaining space in a given timeslot is x qbits, then the processor can be configured to collect the maximum number of samples so that all of the space in that timeslot is used for switchover from Tx mode to Rx (or vice versa), which is governed by transceiver properties, and the RSSI measurement. Thus, the RSSI measurement can be made as long as possible (to improve accuracy) by sampling for as long as possible, even if the PLL has only begun to stabilize.

As will be appreciated, there is an engineering trade-off between the time reduction and the accuracy of the resulting RSSI measurement. By reducing the total time required to measure RSSI by collecting samples without waiting for full PLL stabilization to occur, the initial sampling tends to be inaccurate (although this sampling, of course, become increasingly more accurate as the PLL stabilizes). Since the PLL converges or "decays" toward stabilization, samples collected at the very beginning are least accurate. As time progresses and the PLL stabilizes, the inaccuracy of the sampling decreases until the samples become reasonably accurate, at least for the purposes of measuring or estimating the RSSI. Even being off-frequency by, for example, 10-20 kHz is sufficient for getting a useful RSSI reading.

Determining when to initiate sample collection can be accomplished in different ways. One approach is to determine how much space is available in a given timeslot in which the RSSI is to be measured, and then to work backward to determine, based on how many samples are needed, when to begin sample collection. Another approach is to commence the collection of samples at a fixed point in the timeslot, e.g. at the midpoint of the timeslot, in which case only a fixed number of samples will ever be collected, and therefore the RSSI measurement will only be based on that set of samples. A "time lag" between initiation of stabilization and initiation of sample collection can thus be defined. This time lag can optionally be made a configurable parameter.

Another approach is to initiate sample collection as soon as PLL stabilization has progressed beyond a predetermined threshold, i.e. when the PLL output frequency is reasonably close to the target frequency, and then to employ an algorithm that takes into account the increasing accuracy of the sampling as the PLL converges/stabilizes.

In yet another approach, the time to stabilize the PLL to within 10 kHz or 20 kHz (or some other arbitrary frequency differential) of the carrier frequency can be determined *a priori* and then used to determines how many samples to collect. The device would then collect x samples representing 4x qbits where x = ((625 qbits per timeslot) - (time required for switching from the transmitter mode to the receiver mode) - (time to program the transceiver for RSSI measurement in the receiver mode) - (time to stabilize the PLL to within 20 kHz of the carrier frequency) - (time to terminate the receiver mode once RSSI measurement is complete))/4. This calculation would be used if the designated timeslot for performing the RSSI measurement is Timeslot #7 (the eighth timeslot) in the 4 Rx + 2 Tx multislot example presented above.

Alternatively, the value of x can be determined as x = ((625 qbits per timeslot) - (time required for switching from the receiver mode to the transmitter mode) - (time to program the transceiver for RSSI measurement in the receiver mode) - (time to stabilize the PLL to within 20 kHz of the carrier frequency) - (time to terminate the receiver mode once RSSI measurement is complete))/4. This calculation would be used if the designated timeslot for performing the RSSI measurement is Timeslot #4 (the fifth timeslot) in the 4 Rx + 2 Tx multislot example presented above. As was the case in the specific example presented above, it will often be the case that one of the two timeslots offers more available space than the other one, and is thus the prime candidate for scheduling the RSSI measurement. If, by happenstance, the Rx-Tx switchover time is the same as the Tx-Rx switchover time, then the available space in the two potentially usable timeslots is identical, and it therefore becomes merely a matter of design choice as to which one to employ. For even higher multislot classes where there are seven (7) timeslots devoted to data transmission and reception and thus only one (1) timeslot potentially available for RSSI, then no comparison is required. Depending on whether the available timeslot follows the Tx mode or the Rx mode, the appropriate calculation is used to determine how many samples can be collected (assuming the latter approach of initiating sampling only once the PLL has converged to within a predetermined frequency differential).

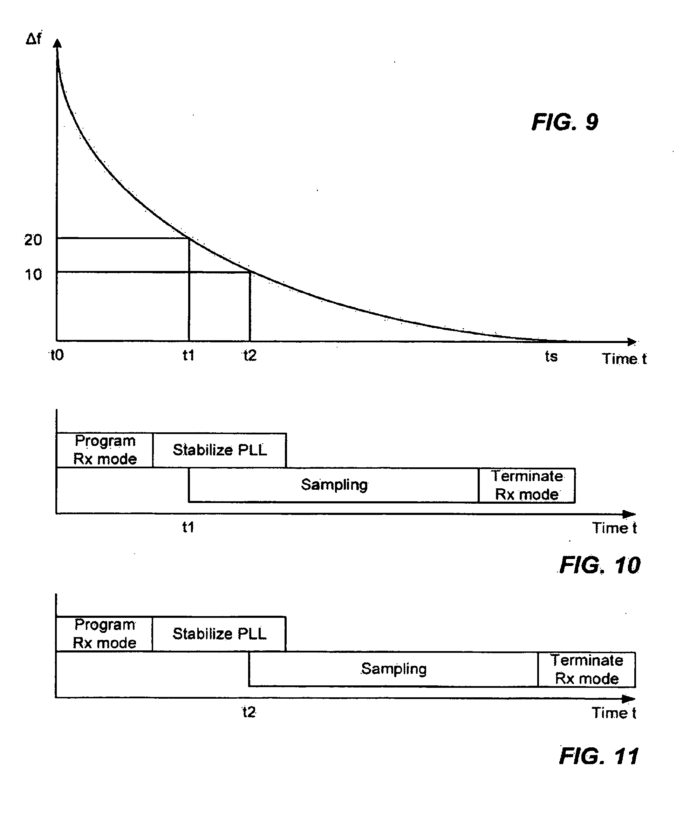

FIG. 9 is a graphical depiction of the stabilization of the PLL over time. In this graph, a frequency differential of 20 kHz (or other arbitrary value) corresponds to time t1 whereas a frequency differential of 10 kHz (or other arbitrary value) corresponds to time t2. Time ts corresponds to the complete stabilization time. In this novel technique, sampling begins prior to ts, such as, for example, at t1 or at t2. Below FIG. 9 are two time-based bar graphs (FIG. 10 and FIG. 11) showing that the sampling is at least partially in parallel with the PLL stabilization. Indeed, it is possible to commence sampling as soon as the PLL output frequency closes in on the target frequency.

This novel method therefore employs a dedicated low-power receive mode (distinct from the normal receive mode) for measuring the received signal strength indication (RSSI). This dedicated low-power receive mode (also referred to herein as a fast receive mode) eliminates the need to set up the receiver in a normal receive mode for measuring RSSI, which is too time-consuming to fit within the available space in the timeslot. Thus, the method switches the transceiver on the wireless device between a normal receive mode for receiving TDMA data and a fast receive mode for performing the RSSI measurement.

This novel technology enables implementation of the 4-2 multislot class (4 downlink and 2 uplink) in EDGE (Enhanced Data rates for GSM Evolution) and can also be used to implement higher multislot classes in which six or seven of the eight timeslots of the GSM frame are used for either uplink (data transmission) or downlink (data reception). As noted earlier, this novel technology obviates the need for incorporating an additional receiver or using an advanced and expensive PLL design.

Not only does this technology provide a faster setup time for a dedicated RSSI receive mode, it also reduces power consumption and thus preserves battery life. In other words, this new technology eliminates the need to set up a high-power receive mode that is normally needed to measure RSSI using the traditional approach.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the handheld electronic device.

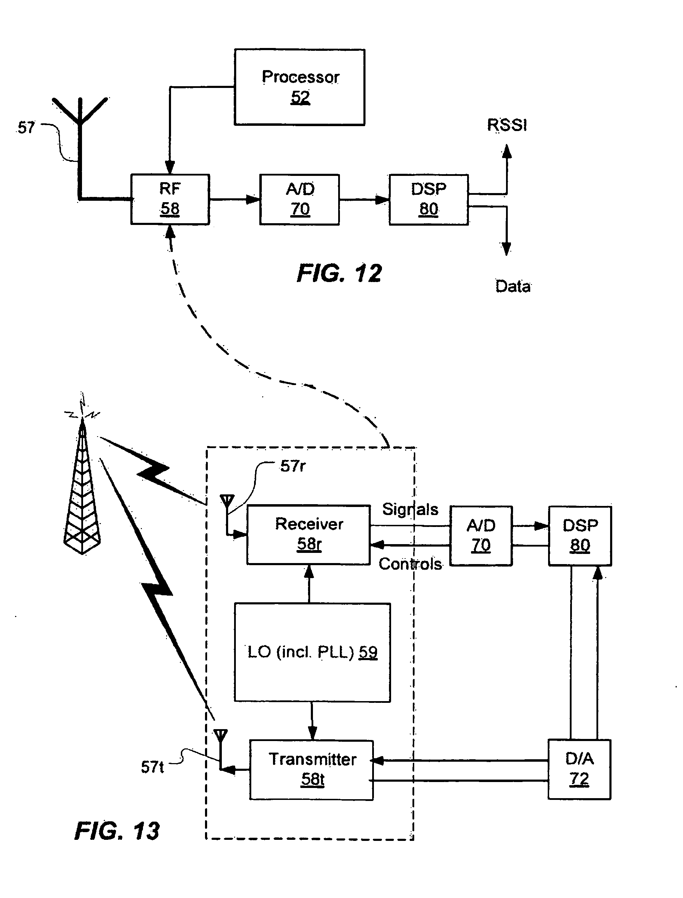

FIG. 12 depicts a simplified schematic circuit diagram showing how the processor 58 of the wireless device can be used to switch the RF chip 58 between a normal receive mode and a fast receive mode (i.e. a dedicated RSSI measurement mode). The data received by the RF chip 58 is processed by the analog-to-digital converter (A/D) 70 and digital signal processor 80. In fast receive mode, the DSP provides an RSSI measurement based on the sampling whereas in the normal receive mode, the DSP receives digital TDMA data for standard digital signal processing. The main components of the RF chip 58 are shown schematically in FIG. 13. The RF transceiver 58 comprises both a receiver 58r and its respective antenna 57r and a transmitter 58t and its respective antenna 57t. The transmitter and receiver have a local oscillator (LO) 59 including a PLL. When the processor instructs the RF chip to enter fast receive mode, sampling begins prior to complete stabilization of the PLL in the LO 59. This enables RSSI measurements to be scheduled in the available space in a given timeslot, thereby enabling the device to handle higher multislot classes.

For the purposes of the present specification, "GSM" is meant to include any of the GSM/UMTS family of mobile communication standards. However, it should be appreciated that the technology described herein can be applied, mutatis mutandis, to other TDMA-based mobile communication systems.

This new technology has been described in terms of specific implementations and configurations which are intended to be exemplary only. The scope of the exclusive right sought by the Applicant is therefore intended to be limited solely by the appended claims.

## Claims

1. A method of transmitting and receiving data using a wireless communications device (50) that is enabled for higher multislot classes in which a plurality of uplink timeslots of each time division multiple access 'TDMA' frame is reserved for transmitting data and a plurality of downlink timeslots of each TDMA frame is reserved for receiving data, the method comprising receiving (100) TDMA data on at least one of the
plurality of downlink timeslots reserved for receiving data;
switching (100) a transceiver (58) of the wireless communications device (50) from a receiver mode to a transmitter mode;
transmitting (300) TDMA data on at least one of the plurality of uplink timeslots reserved for transmitting data;
switching (400) the transceiver (58) of the wireless communications device (50) from the transmitter mode to the receiver mode; and
measuring (500), with the transceiver (58) operating in the receiver mode, a received signal strength indication 'RSSI' by initiating collection of RSSI signal samples prior to complete stabilization of a phase-locked loop 'PLL' (59-) of the transceiver (58).

2. The method as claimed in claim 1 wherein switching the transceiver (58) from the receiver mode to the transmitter mode comprises:
terminating (210) the receiver mode;
programming (220) the transceiver (58) for the transmitter mode; and
stabilizing (230) the PLL (59) for the transmitter mode.

3. The method as claimed in claim 1 or claim 2 wherein switching the transceiver (58) from the transmitter mode to the receiver mode comprises:
terminating (410) the transmitter mode;
programming (420) the transceiver (58) for the receiver mode; and
stabilizing (430) the PLL (59) for the receiver mode.

4. The method as claimed in any one of claims 1 to 3 wherein measuring the received signal strength indication 'RSSI' comprises:
programming the transceiver (58) for the receiver mode;
initiating (520) stabilization of the PLL (59);
initiating (530) collection of RSSI signal samples while the PLL (59) is still stabilizing; and
terminating (540) the receiver mode when a maximum number of RSSI signal samples has been collected, wherein the maximum number of RSSI signal samples is constrained by a remaining space available in a timeslot during which the RSSI is to be measured.

5. The method as claimed in any one of claims 1 to 3 wherein measuring the received signal strength indication 'RSSI' comprises initiating collection of RSSI signal samples once the phase-locked loop (59) has stabilized the frequency of a local oscillator to within 20 kHz of the carrier frequency.

6. The method as claimed in any one of claims 1 to 3 wherein measuring the received signal strength indication 'RSSI' comprises collecting x samples representing 4x qbits where x = ((625 qbits per timeslot) - (time required for switching from the transmitter mode to the receiver mode or from the receiver mode to the transmitter mode) - (time to program the transceiver for RSSI measurement in the receiver mode) - (time to stabilize the PLL to within 20 kHz of the carrier frequency) - (time to terminate the receiver mode once RSSI measurement is complete))/4.

7. The method as claimed in any one of claims 1 to 6 wherein the TDMA frame has eight timeslots of which at least six timeslots are reserved for either data transmission or data reception.

8. The method as claimed in any one of claims 1 to 6 wherein the TDMA frame has eight timeslots of which at least seven timeslots are reserved for either data transmission or data reception.

9. A computer program product comprising code which when loaded into memory (54, 56) and executed on a processor (52) of a wireless communications device (50) is adapted to configure a radiofrequency transceiver (58) of the wireless communications device (50) to perform the method of any one of claims 1 to 8.

10. A wireless communications device (50) enabled for higher multislot classes in which a plurality of uplink timeslots of each time division multiple access 'TDMA' frame is reserved for transmitting data and a plurality of downlink timeslots of each TDMA frame is reserved for receiving data, the device comprising:
a radiofrequency transceiver (58) having a phase-locked loop (59) for locking the phase of a local oscillator of the transceiver (58) to the phase of a carrier signal; and
a processor (52) adapted to instruct the radiofrequency transceiver (58) to switch between a normal data-receiving mode in which TDMA data is received on reserved downlink slots and a dedicated RSSI-measurement mode for measuring a received signal strength indication 'RSSI' wherein collection of RSSI signal strength samples is initiated prior to complete stabilization of the phase-locked loop (59).

11. The wireless communications device (50) as claimed in claim 10 wherein the processor is configured to initiate collection of RSSI signal strength samples when the PLL (59) has stabilized to within 20 kHz of the carrier frequency.

12. The wireless communications device (50) as claimed in claim 10 or claim 11 wherein each TDMA frame has eight timeslots of which at least six timeslots are reserved for either data transmission or data reception.

13. The wireless communications device (50) as claimed in any one of claims 10 to 12 wherein the radiofrequency transmitter operates (58) at a lower power when operating in the dedicated RSSI measurement mode.

14. The wireless communications device (50) as claimed in any one of claims 10 to 13 wherein a time lag between initiation of stabilization and initiation of sample collection is a configurable parameter.

15. The wireless communications device (50) as claimed in any one of claims 10 to 14 wherein the processor (52) is configured to cause the radiofrequency transceiver (58) to collect a maximum number of RSSI signal samples, where the maximum number is constrained by the remaining space available in a timeslot during which RSSI is measured.

## Patentansprüche

1. Verfahren zum Senden und Empfangen von Daten unter Verwendung einer drahtlosen Kommunikationsvorrichtung (50), die ausgebildet ist für höhere Mehrfachschlitz-Klassen, wobei eine Vielzahl von Uplink-Zeitschlitzen jedes TDMA(time division multiple access)-Rahmens zum Senden von Daten reserviert ist und eine Vielzahl von Downlink-Zeitschlitzen jedes TDMA-Rahmens zum Empfangen von Daten reserviert ist, wobei das Verfahren aufweist:
Empfangen (100) von TDMA-Daten auf zumindest einem der Vielzahl von Downlink-Zeitschlitzen, die zum Empfangen von Daten reserviert sind;
Umschalten (100) eines Transceivers (58) der drahtlosen Kommunikationsvorrichtung (50) von einem Empfänger-Modus in einen Sender-Modus;
Senden (300) von TDMA-Daten auf zumindest einem der Vielzahl von Uplink-Zeitschlitzen, die zum Senden von Daten reserviert sind;
Umschalten (400) des Transceivers (58) der drahtlosen Kommunikationsvorrichtung (50) von dem Sender-Modus zu dem Empfänger-Modus; und
Messen (500), mit dem Transceiver (58), der in dem Empfänger-Modus arbeitet, einer Empfangssignalstärkeanzeige RSSI (received signal strength indication) durch Initiieren eines Sammelns von RSSI-Signalabtastwerten vor einer vollständigen Stabilisierung einer Phasenregelschleife (PLL - phase-locked loop) (59) des Transceivers (58).

2. Verfahren gemäß Anspruch 1, wobei ein Umschalten des Transceivers (58) von dem Empfänger-Modus zu dem Sender-Modus aufweist:
Beenden (210) des Empfänger-Modus;
Programmieren (220) des Transceivers (58) für den Sender-Modus; und
Stabilisieren (230) der PLL (59) für den Sender-Modus.

3. Verfahren gemäß Anspruch 1 oder Anspruch 2, wobei ein Umschalten des Transceivers (58) von dem Sender-Modus zu dem Empfänger-Modus aufweist:
Beenden (410) des Sender-Modus;
Programmieren (420) des Transceivers (58) für den Empfänger-Modus; und
Stabilisieren (430) der PLL (59) für den Empfänger-Modus.

4. Verfahren gemäß einem der Ansprüche 1 bis 3, wobei ein Messen der Empfangssignalstärkeanzeige "RSSI" aufweist:
Programmieren des Transceivers (58) für den Empfänger-Modus;
Initiieren (520) einer Stabilisierung der PLL (59);
Initiieren (530) einer Sammlung von RSSI-Signalabtastwerten, während die PLL (59) noch stabilisiert; und
Beenden (540) des Empfänger-Modus, wenn eine maximale Anzahl von RSSI-Signalabtastwerten gesammelt wurde, wobei die maximale Anzahl von RSSI-Signalabtastwerten durch einen verbleibenden Platz begrenzt wird,
der in einem Zeitschlitz verfügbar ist, während dem die RSSI zu messen ist.

5. Verfahren gemäß einem der Ansprüche 1 bis 3, wobei ein Messen der Empfangssignalstärkeanzeige "RSSI" aufweist ein Initiieren eines Sammelns von RSSI-Signalabtastwerten, sobald die Phasenregelschleife (59) die Frequenz eines lokalen Oszillators auf innerhalb 20 kHz der Trägerfrequenz stabilisiert hat.

6. Verfahren gemäß einem der Ansprüche 1 bis 3, wobei ein Messen der Empfangssignalstärkeanzeige "RSSI" aufweist ein Sammeln von x Abtastwerten, die 4x qbits repräsentieren, wobei x = ((625 qbits pro Zeitschlitz) - (erforderliche Zeit zum Umschalten von dem Sender-Modus zu dem Empfänger-Modus oder von dem Empfänger-Modus zu dem Sender-Modus) - (Zeit zum Programmieren des Transceivers für eine RSSI-Messung in dem Empfänger-Modus) - (Zeit zum Stabilisieren der PLL auf innerhalb von 20 kHz der Trägerfrequenz) - (Zeit zum Beenden des Empfänger-Modus, sobald die RSSI-Messung vollständig ist))/4.

7. Verfahren gemäß einem der Ansprüche 1 bis 6, wobei der TDMA-Rahmen acht Zeitschlitze hat, von denen zumindest sechs Zeitschlitze entweder für eine Daten-Übertragung oder einen Daten-Empfang reserviert sind.

8. Verfahren gemäß einem der Ansprüche 1 bis 6, wobei der TDMA-Rahmen acht Zeitschlitze hat, von denen zumindest sieben Zeitschlitze entweder für eine Daten-Übertragung oder einen Daten-Empfang reserviert sind.

9. Computerprogrammprodukt, das Code aufweist, der, wenn in einen Speicher (54, 56) geladen und auf einem Prozessor (52) einer drahtlosen Kommunikationsvorrichtung (50) ausgeführt, ausgebildet ist, einen Funkfrequenztransceiver (58) der drahtlosen Kommunikationsvorrichtung (50) zu konfigurieren zum Durchführen des Verfahrens gemäß einem der Ansprüche 1 bis 8.

10. Drahtlose Kommunikationsvorrichtung (50), die ausgebildet ist für höhere Mehrfachschlitz-Klassen, wobei eine Vielzahl von Uplink-Zeitschlitzen jedes TDMA(time division multiple access)-Rahmens zum Senden von Daten reserviert ist und eine Vielzahl von Downlink-Zeitschlitzen jedes TDMA-Rahmens zum Empfangen von Daten reserviert ist, wobei die Vorrichtung aufweist:
einen Funkfrequenztransceiver (58) mit einer Phasenregelschleife (PLL - phase-locked loop) (59) zum Regeln auf die Phase eines lokalen Oszillators des Transceivers (58) mit der Phase eines Trägersignals; und
einen Prozessor (52), der ausgebildet ist, den Funkfrequenztransceiver (58) anzuweisen zum Umschalten zwischen einem normalen Daten-Empfangs-Modus, in dem TDMA-Daten auf reservierten Downlink-Schlitzen empfangen werden, und einem zugewiesenen RSSI-Mess-Modus zum Messen einer Empfangssignalstärkeanzeige "RSSI", wobei ein Sammeln von RSSI-Signalstärke-Abtastwerten initiiert wird vor einer vollständigen Stabilisierung der Phasenregelschleife (59).

11. Drahtlose Kommunikationsvorrichtung (50) gemäß Anspruch 10, wobei der Prozessor konfiguriert ist, ein Sammeln von RSSI-Signalstärkeabtastwerten zu initiieren, wenn die PLL (59) stabilisiert ist auf innerhalb von 20 kHz der Trägerfrequenz.

12. Drahtlose Kommunikationsvorrichtung (50) gemäß Anspruch 10 oder Anspruch 11, wobei jeder TDMA-Rahmen acht Zeitschlitze hat, von denen zumindest sechs Zeitschlitze entweder für eine Daten-Übertragung oder einen Daten-Empfang reserviert sind.

13. Drahtlose Kommunikationsvorrichtung (50) gemäß einem der Ansprüche 10 bis 12, wobei der Funkfrequenzsender (58) mit niedrigerer Leistung arbeitet bei Betrieb in dem zugewiesenen RSSI-Mess-Modus.

14. Drahtlose Kommunikationsvorrichtung (50) gemäß einem der Ansprüche 10 bis 13, wobei eine Zeitverzögerung zwischen einer Initiierung einer Stabilisierung und einer Initiierung einer Abtastwertsammlung ein konfigurierbarer Parameter ist.

15. Drahtlose Kommunikationsvorrichtung (50) gemäß einem der Ansprüche 10 bis 14, wobei der Prozessor (52) konfiguriert ist, den Funkfrequenztransceiver (58) zu veranlassen, eine maximale Anzahl von RSSI-Signalabtastwerten zu sammeln, wobei die maximale Anzahl begrenzt ist durch den verbleibenden Platz, der in einem Zeitschlitz verfügbar ist, während dem die RSSI gemessen wird.

## Revendications

1. Procédé de transmission et de réception de données utilisant un dispositif de communications sans fil (50) qui est apte aux classes supérieures d'intervalles de temps multiples où une pluralité d'intervalles de temps dans le sens voie montante de chaque trame de type accès multiple par répartition dans le temps, TDMA, est réservée pour la transmission de données et une pluralité d'intervalles de temps dans le sens voie descendante de chaque trame TDMA est réservée pour la réception de données, le procédé comprenant le fait :
de recevoir (100) des données TDMA sur au moins l'un de la pluralité d'intervalles de temps dans le sens voie descendante réservée pour la réception de données ;
de commuter (100) un émetteur-récepteur (58) du dispositif de communications sans fil (50) d'un mode récepteur à un mode émetteur ;
de transmettre (300) des données TDMA sur au moins l'un de la pluralité d'intervalles de temps dans le sens voie montante réservée pour la transmission de données ;
de commuter (400) l'émetteur-récepteur (58) du dispositif de communications sans fil (50) du mode émetteur au mode récepteur ; et
alors que l'émetteur-récepteur (58) fonctionne en mode récepteur, de mesurer (500) une indication de l'intensité du signal reçu 'RSSI' en initiant la collecte d'échantillons de signaux RSSI avant de terminer la stabilisation de la boucle à verrouillage de phase 'PLL' (59) de l'émetteur-récepteur (58).

2. Procédé tel que revendiqué dans la revendication 1, dans lequel le fait de commuter l'émetteur-récepteur (58) du mode récepteur au mode émetteur comprend le fait :
de mettre fin (210) au mode récepteur ;
de programmer (220) l'émetteur-récepteur (58) pour le mode émetteur ; et
de stabiliser (230) la PLL (59) pour le mode émetteur.

3. Procédé tel que revendiqué dans la revendication 1 ou la revendication 2, dans lequel le fait de commuter l'émetteur-récepteur (58) du mode émetteur au mode récepteur comprend le fait :
de mettre fin (410) au mode émetteur ;
de programmer (420) l'émetteur-récepteur (58) pour le mode récepteur ; et
de stabiliser (430) la PLL (59) pour le mode récepteur.

4. Procédé tel que revendiqué dans l'une quelconque des revendications 1 à 3, dans lequel le fait de mesurer l'indication de l'intensité du signal reçu 'RSSI' comprend le fait :
de programmer l'émetteur-récepteur (58) pour le mode récepteur ;
d'initier (520) la stabilisation de la PLL (59) ;
d'initier (530) la collecte d'échantillons de signaux RSSI alors que la PLL (59) est encore en cours de stabilisation ; et
de mettre fin (540) au mode récepteur lorsqu'un nombre maximal d'échantillons de signaux RSSI a été collecté, où le nombre maximal d'échantillons de signaux RSSI est contraint par un espace restant disponible dans un intervalle de temps pendant lequel la RSSI doit être mesurée.

5. Procédé tel que revendiqué dans l'une quelconque des revendications 1 à 3, dans lequel le fait de mesurer l'indication de l'intensité du signal reçu 'RSSI' comprend le fait d'initier la collecte d'échantillons de signaux RSSI dès lors que la boucle à verrouillage de phase (59) a stabilisé la fréquence d'un oscillateur local dans les 20 kHz de la fréquence porteuse.

6. Procédé tel que revendiqué dans l'une quelconque des revendications 1 à 3, dans lequel le fait de mesurer l'indication de l'intensité du signal reçu 'RSSI' comprend le fait de collecter x échantillons représentant 4x qbits où x = ((625 qbits par intervalle de temps) - (le temps nécessaire pour la commutation du mode émetteur au mode récepteur ou du mode récepteur au mode émetteur) - (le temps nécessaire pour la programmation de l'émetteur-récepteur pour une mesure de RSSI dans le mode récepteur) - (le temps nécessaire pour la stabilisation de la PLL dans les 20 kHz de la fréquence porteuse) - (le temps nécessaire pour mettre fin au mode récepteur dès lors qu'une mesure de RSSI est terminée))/4.

7. Procédé tel que revendiqué dans l'une quelconque des revendications 1 à 6, dans lequel la trame TDMA possède huit intervalles de temps dont au moins six intervalles de temps sont réservés soit à la transmission de données soit à la réception de données.

8. Procédé tel que revendiqué dans l'une quelconque des revendications 1 à 6, dans lequel la trame TDMA possède huit intervalles de temps dont au moins sept intervalles de temps sont réservés soit à la transmission de données soit à la réception de données.

9. Produit de programme informatique comprenant un code qui, lorsqu'il est chargé dans une mémoire (54, 56) et exécuté sur un processeur (52) d'un dispositif de communications sans fil (50), est conçu pour configurer un émetteur-récepteur radiofréquence (58) du dispositif de communications sans fil (50) en vue de mettre en oeuvre le procédé de l'une quelconque des revendications 1 à 8.

10. Dispositif de communications sans fil (50) apte aux classes supérieures d'intervalles de temps multiples où une pluralité d'intervalles de temps dans le sens voie montante de chaque trame de type accès multiple par répartition dans le temps, 'TDMA', est réservée pour la transmission de données et une pluralité d'intervalles de temps dans le sens voie descendante de chaque trame TDMA est réservée pour la réception de données, le dispositif comprenant :
un émetteur-récepteur radiofréquence (58) ayant une boucle à verrouillage de phase (59) pour verrouiller la phase d'un oscillateur local de l'émetteur-récepteur (58) sur la phase d'un signal porteur ; et
un processeur (52) conçu pour demander à l'émetteur-récepteur radiofréquence (58) de commuter entre un mode normal de réception de données dans lequel des données TDMA sont reçues sur des intervalles de temps réservés dans le sens voie descendante, et un mode de mesure de RSSI dédié destiné à la mesure d'une indication de l'intensité du signal reçu 'RSSI' dans lequel la collecte d'échantillons d'intensité de signaux RSSI est initiée avant de terminer la stabilisation de la boucle à verrouillage de phase (59).

11. Dispositif de communications sans fil (50) tel que revendiqué dans la revendication 10, dans lequel le processeur est configuré pour initier la collecte d'échantillons de l'intensité de signaux RSSI lorsque la PLL (59) s'est stabilisée dans les 20 kHz de la fréquence porteuse.

12. Dispositif de communications sans fil (50) tel que revendiqué dans la revendication 10 ou la revendication 11, dans lequel chaque trame TDMA possède huit intervalles de temps dont au moins six intervalles de temps sont réservés soit à la transmission de données soit à la réception de données.

13. Dispositif de communications sans fil (50) tel que revendiqué dans l'une quelconque des revendications 10 à 12, dans lequel l'émetteur-récepteur radiofréquence (58) fonctionne à une puissance plus faible lorsqu'il se trouve dans le mode de mesure de RSSI dédié.

14. Dispositif de communications sans fil (50) tel que revendiqué dans l'une quelconque des revendications 10 à 13, dans lequel un retard temporel entre l'initiation de la stabilisation et l'initiation d'une collecte d'échantillons est un paramètre configurable.

15. Dispositif de communications sans fil (50) tel que revendiqué dans l'une quelconque des revendications 10 à 14, dans lequel le processeur (52) est configuré pour amener l'émetteur-récepteur radiofréquence (58) à collecter un nombre maximal d'échantillons de signaux RSSI, où le nombre maximal est contraint par l'espace restant disponible dans un intervalle de temps pendant lequel la RSSI est mesurée.
